# EUROPEAN PATENT SPECIFICATION

(11) **EP 2 423 816 B1**
(45) Date of publication and mention of the grant of the patent: **12.08.2020**
(21) Application number: 10174154.4
(22) Date of filing: 26.08.2010
(51) Int. Cl.: G08G 5/06, G06F 11/30, G06F 11/34

(54) **System and method for real-time preserving animated logging**
System und Verfahren zur Echtzeitkonservierung einer animierten Erfassung
Système et procédé pour enregistrement animé à préservation en temps réel

(43) Date of publication of application: 29.02.2012
(73) Proprietor: Software AG, 64297 Darmstadt (DE)
(72) Inventor: Flemig, Holger, 04229 Leipzig (DE); Nöbel, Lars, 04207 Leipzig (DE); Holke, Henrik, 04808 Mark Schönstädt (DE)
(74) Representative: Lang, Johannes

(56) References cited:
- EP-A2- 0 379 278
- DE-A1-102008 064 337
- US-A- 3 921 148
- US-A1- 2002 107 837
- US-A1- 2005 102 323
- US-A1- 2007 140 301
- US-A1- 2010 005 169
- US-A1- 2010 174 992

## Description

### 1. Technical Field

The present invention relates to a system and a method for real-time preserving animated logging.

### 2. The Prior Art

Distributed computing systems (in particular client/server systems) are oftentimes used for displaying mission-critical information in real-time (e.g. data values, measurement values, instant messages, charts and graphics). For example, air traffic monitoring systems typically use very complex computer hardware and software for providing the air traffic controlling staff with real-time information, such as the current state of airplanes landing and taking off on an airport, current weather conditions and other related security-critical data.

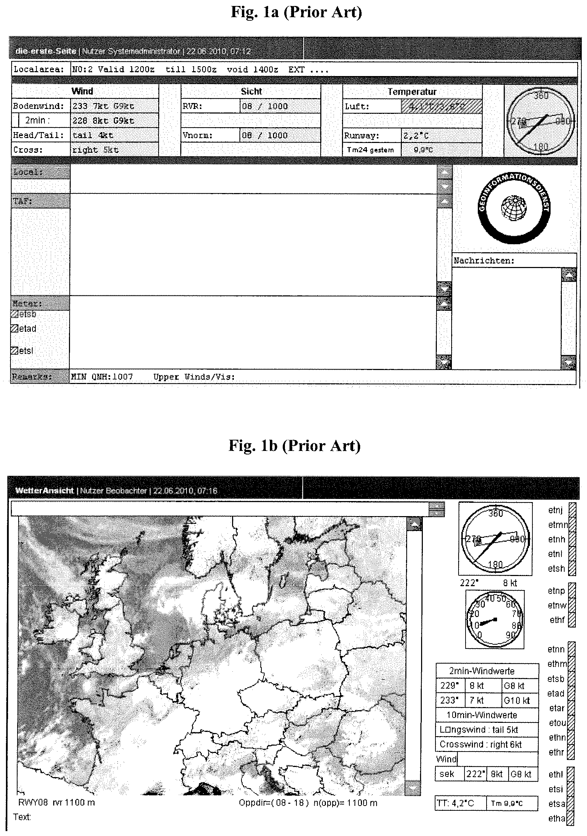

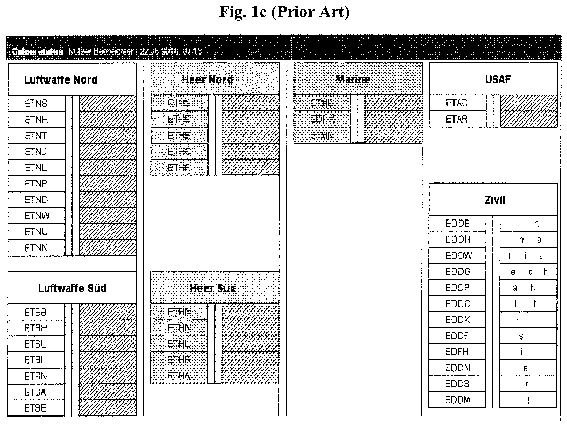

In particular in security-critical applications, it is necessary to prove during a revision or causal research which information was displayed to a particular user of the system at a particular point in time. For example, in the event that an airplane drifts off the runway during landing due to strong cross-winds, a causal research would have to consider the question if the air traffic controlling staff in charge was informed of the cross-wind prior to the accident. In other words, it has to be reconstructed at precisely which point in time the relevant information was displayed on a screen of the air traffic monitoring system. In this context, it has to be considered that a typical screen of such types of security-critical systems shows a plethora of different information (cf. Figs. 1a - 1c), that the displayed information may depend on the logged-in user and that the displayed information changes very rapidly (e.g. every second or even each fraction of a second).

The data management (i.e. the data collection and processing) is typically performed by a central server system that delivers the data to one or more connected client systems that display the respective information. Users of the client systems typically have to log in to the server in order to be provided with the relevant content.

In order to allow for a reproducible investigation and analysis of the displayed information, a logging mechanism is needed per user, information unit and time, which is capable to easily and efficiently reproduce the information that was displayed on a user's screen within a particular elapsed time span, ideally in the form of an exact (and where appropriate accelerated or decelerated) reproduction of the screen(s) displayed during this time span.

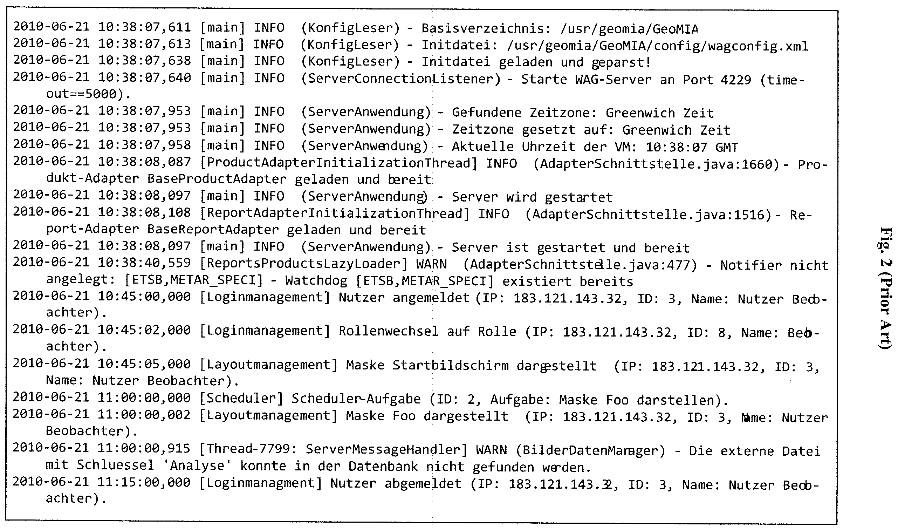

In the prior art, two general logging mechanisms are known: Typical server-side logging mechanisms employ log files (typically in plain text format, cf. Fig. 2) or database entries (e.g. login-events and data). The evaluation is done by means of lexical analyses of the log files / database entries. However, an exact replaying of the corresponding screen contents of a particular time span is not possible. Moreover, the server-side logging of the displayed information typically leads to very large amounts of logging data (e.g. cross-wind velocity measured each second), which cannot be processed effectively and in the worst case makes a real-time processing impossible. Further, such vast amounts of data are particularly disadvantageous, since the logging data typically have to be stored and archived for a long time (e.g. several years due to legal constraints).

An alternative approach is client-side logging (e.g. by recording a screencast, i.e. a video sequence, of the contents displayed on the client). However, also here, vast amounts of data are produced. Further, video recordings cannot be automatically analyzed in an efficient manner, since video files do not carry discrete values that could be automatically processed. Moreover, since the log data is in this approach collected at the individual client system(s), it has to be ensured that the distributed log data is consolidated in a consistent manner, which is very laborious and complex. In the case of video information, this approach further poses high requirements on the underlying network bandwidth, which are in certain scenarios very costly or even impossible to meet.

In this context, European patent application EP 1 550 957 A2 and the related US 2005/0198300 A1 disclose a data logging framework, wherein user inputs are logged and time-stamped to create an event log. Event logs may be analyzed later on. However, since an event log entry is created for each user input, the disclosed data logging framework produces large amounts of logging data, as described above. The US 2010/0174992 A1 concerns a system and method for screen recording, wherein display data displayed on a local screen as well as layout data related to a presentation of the display data is logged and later analyzed. However, also this technique produces large logging data amounts. Further techniques for logging user interaction, in particular in the context of a user's interaction with a web page, can be found e.g. in US 2006/0206612 A1 and the related EP 1 701 265 A1, US 2010/0005169 A1 and DE 10 2006 051 092 B4.

US 2005/0102323 A1 relates to systems and methods for storing test results in a database. During operation, the system receives test results and places them in a results database. A new entry in the results database is created only when the result of the particular test changes, so that the result database is much smaller than a typical test database.

US 2002/0107837 A1 deals with a system to track changes in the rows of a database system and teaches to first record all relevant events in a transaction log and only then to remove any redundant records therefrom. EP 0 379 278 A2 discloses a data logging apparatus using time-stamps. DE 10 2008 064 337 A1 deals with logging the behaviour of a production site, but the proposed system logs all process parameters and communication actions.

US 2007/140301 A1 relates to "skip" and "differential" recording techniques for recording values of network parameter to a log in a lossless manner while reducing storage resources used to record such values. EP0379278A2 discloses a data logging apparatus using time-stamps.

DE102008064337A1 deals with logging the behaviour of a production site, but the proposed system logs all process parameters and communication actions.

In summary, the known techniques for logging real-time information lead to vast and unmanageable amounts of data which can hardly be analyzed in an automated manner. An exact reproduction of the actual screen contents of a given user within an elapsed time span is hardly possible. It is therefore the technical problem underlying the present invention to provide an improved technique for logging real-time information to be displayed on a client system in an efficient manner that reduces the amount of logging data, but still allows for an exact reproduction of the displayed information, thereby at least partly overcoming the above explained disadvantages of the prior art.

### 3. Summary of the Invention

The invention is defined in the independent claims. In the following, the parts of the description and drawings referring to embodiments which are not covered by the claims are not presented as embodiments of the invention but as background art or examples useful for understanding the invention. This problem is according to one aspect of the invention solved by a method for logging real-time data to be displayed on at least one client system in accordance with claim 1.

Accordingly, the above method produces log entries for a particular data item. During operation, the data item carries in each point in time a current value that is displayed on at least one client system. In this context, the term "real-time data" refers to the fact that the displayed information is preferably immediately displayed (or displayed after a very short time) on the client system and that the information changes very rapidly (e.g. each second or even each fraction of a second).

In the above-described context of an air traffic monitoring system, the data item may reflect the cross-wind that is present on an airport's runway, wherein the first and second values represent the current amount of cross-wind in a particular point in time. It will be appreciated that the method of the invention is not limited to processing only one data item, but may process any amount of data items. Likewise, although only a first and a second value of the data item is described, it should be appreciated that the present method is capable of producing log entries for any number of values of a given data item.

Since the data item represents real-time data, such as runway cross-winds, which is measured in very short time intervals, common logging methods would produce vast amounts of logging data, as already described above. The present invention departs from the known approaches in that a new log entry for the data item is created (preferably only), if the newly measured (second) value of the data item differs from the value of the preceding (first) value. This greatly reduces the amount of created logging data, while the actual evolution and timely sequence of the cross-wind can still be exactly reproduced later on. It should be appreciated that the logging, i.e. the creation of the log entries, may take place before, after or while the respective value of the data item is displayed on the at least one client system.

The above method steps are performed by a central server system. Accordingly, the method allows for a server-side logging of contents delivered to one or more client systems.

In another aspect of the present invention, the first log entry may comprise a unique identifier and a first time-stamp and the second log entry may comprise the same unique identifier and a second time-stamp, wherein the first and second time-stamps indicate the creation time of the respective log entries. Accordingly, the different log entries captured for a particular data item over time can be easily correlated, since they share the same unique identifier. The identifier may be created e.g. based on a running number, a hash code of the respective data item, a descriptive name or in any other suitable manner. Since each log entry carries an exact time-stamp, it is possible to easily reconstruct a sequence of values for a particular data item.

In a further aspect, the first and second log entries may comprise at least one user identifier and / or role identifier of at least one user who is logged-in at the at least one client system. Accordingly, this aspect allows to exactly correlate a particular user of the client system (e.g. an air traffic monitoring staff member) with a data item or a sequence of data item values.

The first and second log entries may comprise only a reference to the least one user identifier and / or role identifier, the least one user identifier and / or role identifier being stored in a user repository. Accordingly, this aspect further reduces the amount of created log data, since only relatively short pointers to existing user identifiers and / or role identifiers are stored in the log entries.

Additionally or alternatively, the first and second log entries may comprise information selected from the group comprising an IP address, port number and / or hostname of the at least one client, a time-stamp of at least one user logging-in at the at least one client system and / or a time-stamp of at least one user logging-out of the at least one client system. This aspect, depending on the selection of information stored in the log entries, allows for a particularly exact and comprehensible ex post reproduction.

The method comprises the further steps of sending first real-time data to the at least one client system, wherein the first real-time data comprises the first value of the data item and visual display information, and sending second real-time data to the at least one client system, wherein the second real-time data comprises the second value of the data item, but no visual display information. Accordingly, the at least one client system is provided with information to be displayed by the system, however, once the visual display information that is necessary for the client system to display the information has been transferred, only updates of the data item values are transferred. This aspect greatly reduces the amount of data that has to be transmitted between the client and the originating system, since the visual display information is only transmitted once (or after it has been changed).

In one aspect, the visual display information may indicate at least one screen mask to be displayed on the at least one client system, wherein the at least one screen mask comprises at least one visual element adapted for displaying the data item. Accordingly, it is possible to define one or more screen masks that define which visual elements are to be displayed on the client system(s) in which layout. Also this visual display information is logged in the log entries, which allows for an exact ex post reproduction of the screen(s) displayed on a particular client system. To this end, the first and / or second log entry may comprise an indication of the at least one screen mask, e.g. in the form of a reference to a screen mask definition that may be stored in a screen mask repository, which further decreases the amount of logging data that has to be generated.

Preferably, the first and / or second log entry is created only if the at least one client system has confirmed receipt of the first and / or second real-time data. Accordingly, data relating to a client system that has been logged-off or otherwise lost connection to the server system is no longer logged, thereby further reducing the amount of logging data.

In yet another aspect of the present invention, the method may comprise the further steps of receiving an emergency event indication and immediately exporting all log entries that have been created since a configurable elapsed point in time. Accordingly, once a special condition, such as an air craft emergency, has been detected, a "backup" of all log entries starting from a particular point in time in the past is immediately generated. This backup can then be used for a later inspection of the emergency.

The method may further comprise the steps of loading a sequence of created log entries and displaying each loaded log entry one after another, thereby replaying the sequence. Additionally or alternatively, the sequence of log entries may be replayed backwards, at accelerated speed (fast motion) and / or decelerated speed (slow motion), and the replay may be stopped, paused and / or resumed.

The present invention also concerns a computer program comprising instructions for implementing any of the above methods.

Furthermore, a server system for logging real-time data to be displayed on at least one client system is provided in accordance with claim 11.

In one aspect, the server system may further comprise a search module, wherein the search module is adapted for loading at least one created log entry based on search attributes selected from the group comprising a time span of a user session, a client system identification, a user identifier and / or role identifier, a screen mask identifier, a value of a data item.

In yet another aspect, the server system may further comprise a replay module, wherein the replay module is adapted for receiving a sequence of created log entries and displaying each received log entry one after another, thereby replaying the sequence.

In further embodiments, the above server system may be adapted for performing any of the above-described methods.

### 4. Short Description of the Drawings

In the following detailed description, presently preferred embodiments of the invention are further described with reference to the following figures:
- Figs. 1a-c:: Exemplary screens of a security-critical real-time information system according to the prior art;
- Fig. 2:: An exemplary plain text log file according to the prior art;
- Fig. 3:: A structural overview of a client/server system in accordance with an embodiment of the present invention;
- Fig. 4:: An exemplary graphical user interface of a server system for replaying a recorded sequence of log entries in accordance with an embodiment of the present invention;
- Fig. 5:: An exemplary database scheme in accordance with an embodiment of the present invention;
- Fig. 6:: An exemplary Java implementation in accordance with an embodiment of the present invention;
- Fig. 7:: A graphical user interface for defining display masks in accordance with an embodiment of the present invention;
- Fig. 8:: A sequence diagram showing steps performed by a client/server system during start-up/login in accordance with an embodiment of the present invention;
- Fig. 9:: A sequence diagram showing steps performed by a client/server system when the connection is lost in accordance with an embodiment of the present invention;
- Fig. 10:: A sequence diagram showing steps performed by a client/server system during logout in accordance with an embodiment of the present invention;
- Fig. 11:: A sequence diagram showing steps performed by a client/server system during a page change in accordance with an embodiment of the present invention; and
- Fig. 12:: A sequence diagram showing steps performed by a client/server system during updating/logging in accordance with an embodiment of the present invention.

### 5. Detailed Description

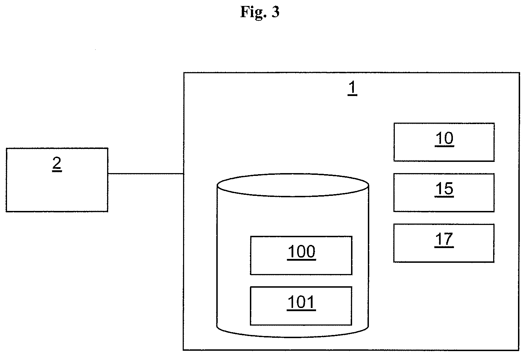

In the following, a presently preferred embodiment of the invention is described with respect to a client/server system as schematically shown in Fig. 3. As can be seen, an exemplary client system 2 is connected to a server system 1. The system 1, preferably a server system 1, comprises a storage means for storing one or more log entries 100, 101. The server system 1 allows for an efficient server-side logging of real-time information displayed on the client system 2. It should be appreciated that Fig. 3 shows only an extremely simplified example and that server systems 1 according to embodiments of the invention are capable of handling any amount of client systems 2, as well as any number of log entries 100, 101.

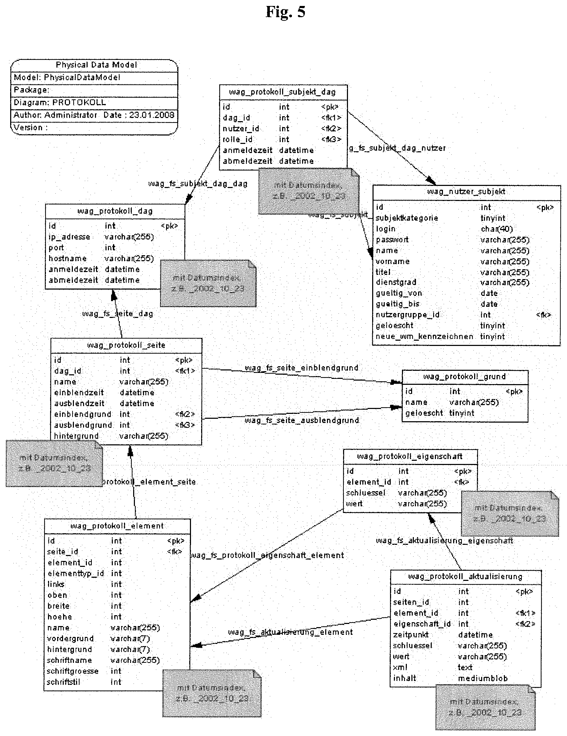

The logging by the server system 1 is performed by logging the respective combination of an element displayed on a particular mask of the client system 2 which represents a given data item (e.g. a "tachometer" element representing the current cross-wind on an aircraft runway), a time-stamp (e.g. based on the server time, wherein the clients and the server may be synchronized via NTP in the same time zone), a value type / value key (e.g. "crosswind direction" for all data relating to the crosswind direction) and a value (i.e. the concrete value of the crosswind direction in a particular point in time). As an alternative to logging the actual data, references may be used in order to reduce the amount of logging data. With reference to the exemplary database scheme of Fig. 5, this may include references to the user data ("nutzer_id"), the user's role(s) ("rolle_id") and / or the displayed elements, i.e. layout components ("element_id" and "elementtyp_id").

Advantageously, a log entry 100, 101 is only created, if the concrete value of a given data item changes, as will be explained in the following.

### Prerequisites

Preferably, the server system 1 continuously writes new realtime-data into its storage means, i.e. as soon as the data is received from external data sources, and / or as soon as the server system 1 itself calculates new data.

The server system 1 may comprise a configuration of the display masks to be displayed on the one or more client systems 2.

The server system 1 may comprise a mapping between display masks and layout components (such as text fields, lists, etc.).

The server system 1 may comprise a mapping between value types / value keys and the layout components of the individual display masks.

The server system 1 may comprise a mapping between users and display masks (in order to reflect access privileges).

Preferably, each user is mapped to at least one display mask. One particular mask may be a log-in mask that is displayed when the respective user performs an initial log-in to the system.

### Delivering content to the one or more client systems 2

During runtime, the following steps are preferably performed:
1. The client system 2 starts and registers with the server system 1.
2. The server system 1 sends layout information (the layout components, their position and / or size on the display mask) to the client system 1, as well as the most current realtime-data for each layout component.
3. Subsequent to this initial transmission of the layout information, only updates are sent from the server system 1 to the client system 2, i.e. updated realtime-data and / or updated layout components.
4. Updates are sent from the server system 1 to the client system 2 as long as the user on the client system 2 stays within the current display mask. When another display mask is selected, the server system 1 proceeds as described in step 2 above.
5. The display of data may be achieved in numerical and / or graphical form (e.g. the crosswind direction may be displayed as numeric value and / or in the form of a compass).
6. If the user terminates the client session (e.g. by logging out of the client system 2 or closing the client application), or if the connection to the server system 1 is lost, no content is delivered anymore to this particular client system 2 by the server system 1.

Preferably, the format and content of the logging data (i.e. the log entries 100, 101) are compatible with the data format that is used for transmitting data from the server system 1 to the at least one client system 2. This aspect has the positive effect that a replaying (at original speed, accelerated or decelerated as well as forwards or backwards) becomes possible.

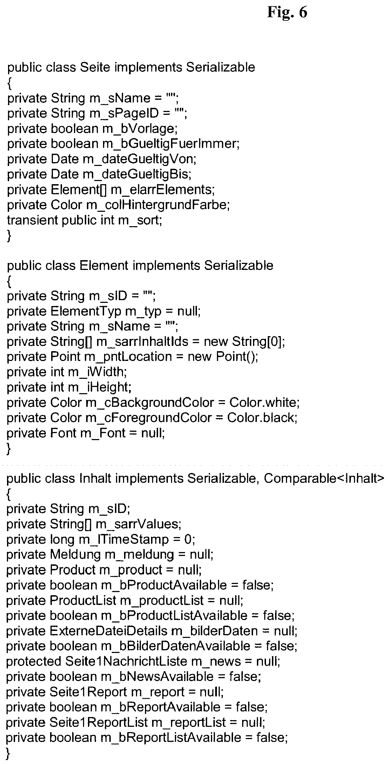

In an exemplary Java implementation, container classes are used for transmitting data from the server system 1 to the client system 2. The container classes are serialized prior to the transmitting and deserialized after receipt at the client system 2. Preferably, the implementation comprises container classes for display masks, layout components and the actual logging data. With reference to the exemplary code shown in Fig. 6 (wherein "WAG" denotes the server system 1 and "DAG" denotes the client system 2), the container class for display masks (cf. Fig. 6, class "Seite") comprises a list of layout elements of type "Element", wherein the class "Element" comprises a list of display component IDs.

As compared to the amount of data when using screen casts (i.e. recorded video streams of a client system's display), the amount of logging data produced by embodiments of the present invention is extremely reduced. Furthermore, all logging is performed centrally at the server.

Furthermore, the logging entries 100, 101 and / or the corresponding data of the user management may be easily exported into a storage means (such as a database) of another server system 1 constructed in the same way, which allows for an (animated) analysis of the logging entries 100, 101 on the other system (see further below).

### Logging data configuration

During operation, the server system 1 may continuously receive current values of real-time data items, e.g. changing values of the current cross-wind on an airplane runway. The real-time data items (or their respective current values, respectively) are preferably received via at least one sensor of the server system 1, wherein the at least one sensor may be a hardware sensor (such as a anemometer), a software sensor and / or another (external) application. All data received by the server system 1 (payload data, i.e. the logging data, as well as pseudo-static data, i.e. layout data) of a given type are annotated by the server system 1 with a unique (preferably bijective) identifier/access key and a time-stamp that indicates the time when the respective data item was received by the server system 1. The types may comprise simple data types such as long or double, as well as text strings, messages, BLOBS (e.g. for images) and other data containers.

If a value of a given data item changes, a new log entry is created with the same identifier/access key than the one of the older log entry, but with a new time-stamp. Accordingly, all data items logged within the server system 1 are valid/current until a newer log entry is created.

### Content configuration

The data items (or their respective value(s), respectively) are displayed on the client system(s) 2 in predefined screen masks, which each group a particular set of elements (widgets). Not every element is capable of displaying all types of data, e.g. a text field element cannot display an image. The elements of a screen mask are assigned with the identifier(s) / access key(s) of the corresponding data item(s), which allows for a definition of which data item(s) are to be displayed by which element(s). Screen masks may be defined per user and/or user role. Preferably, one of the screen masks represents the initial starting screen after a successful user log-in.

### Content visualisation

The content to be displayed at the at least one client system 2 is always sent from the server system 1 (so-called "server push"). Initially, the client system 2 is started (or an instance of a client application on the client system 2, respectively) and connects (preferably over a network) with the server system 1 (or a corresponding server application thereon). Initially, the client system 2 displays a login screen mask, which is preferably stored at the client system 2. A user of the client system 2 is allowed to authenticate with the server system 1, e.g. by entering his username/rolename and password. Preferably, the server system 1 stores a correlation of username/rolename and screen mask combinations and based thereon, the user may select one or more screen masks accessible to him.

In this context, the content to be displayed on the client system 2 correlates with the current content configuration. If a definition of a screen mask or the content configuration is changed, also the information displayed on the client system 2 changes accordingly.

Accordingly, the "server push" preferably includes both the available screen masks, the layout information contained therein, as well as the individual data items, which are transmitted to the client system 2.

The information displayed on the client system 2 is preferably updated, only when the data items, the layout and / or the content correlation changes (based on the most recent time-stamp). For the further visualisation at the client system 2, only data value changes and/or layout changes are transmitted from the server system 1.

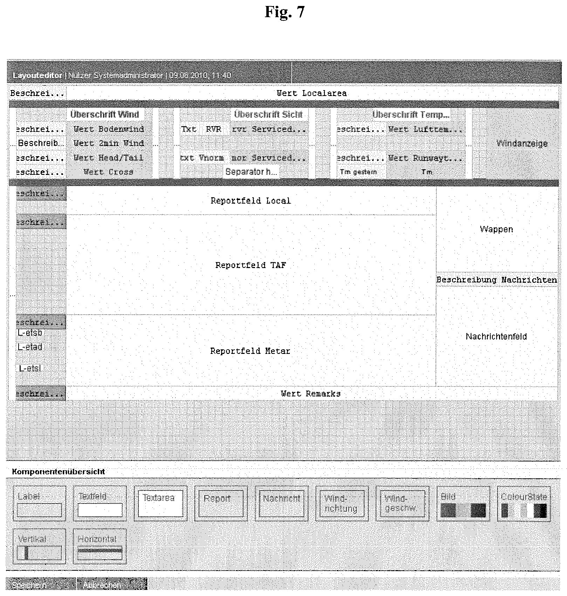

The display masks may be composed by means of a graphical user interface (GUI), as exemplarily shown in Fig. 7. To this end, the GUI may comprise a library of available display components and a user may define a mask by dragging and dropping the respective display components into the mask definition. The user may further define the size, position, font type, color, background color and label of the display components.

In order to define the mapping between the display components of a given mask and the data they should display, the user may right-click on the display component and may select the data key of the desired data element. The user may also add a suffix and / or prefix (e.g. for denoting temperatures with "°C" after the actual value). A given display component may be correlated with more than one data item, e.g. a display component for graphically displaying the crosswind direction and the direction of the landing strip may display both of the respective values.

### Logging

During logging, all updates of data item values and preferably also all updates to visual display information are logged at the server system 1 by a logging module 10 (cf. Fig. 3), preferably per client system 2 authenticated with the server system 1 and per logged-in user/role. The actual logging starts only after a client system 2 has confirmed/acknowledged receipt of the data transferred via "server push". This aspect ensures that no data is logged for a client system 2 that is no longer available within the network. The respective contents are then also no longer delivered to this client system 2.

In a preferred embodiment of the invention, the following information is logged by the server system 1 (or any subset thereof):
- An IP address, port and / or hostname of the respective client system 2
- A username and / or user role (preferably only a reference)
- A time-stamp of a user's log-in process
- A time-stamp of a user's log-off process or other kind of disconnection from the server system 1
- The currently displayed screen mask (preferably together with a time-stamp)
- The currently displayed elements of the screen mask (preferably together with a time-stamp)
- The currently displayed contents on the client system's screen (preferably together with a time-stamp)

All data relevant for display at the client system 2 (i.e. screen mask(s), element(s) and data item values) are logged preferably per client system 2 registered at the server system 1 and per logged-in user/role. The data are stored in separate storage means (preferably separate database tables) as "live copies", preferably after a confirmation of receipt of the data by the client system 2.

As a result, this redundant data storage ensures that the data is portable and tamper-proof. In addition, all layout information, screen mask access privileges and content configurations are kept persistent.

### Export/import of logging data/log entries

All logged information (see above) may be exported from the storage means of the server system 1. If this data is then imported into another system of similar construction, an analysis and/or replay of the logging data/log entries is possible on the other system. Preferably, the exported log entries are imported into an empty and/or separate storage means (e.g. a database) of the new system.

### Emergency logging

In case of an event that indicates an emergency (such as an extraordinary (external) event like an airplane drifting off the runway, or if inconsistent data item values are observed), a so-called "emergency logging" may be performed. In this case, all logging data / log entries (preferably including the respective data of the user management) are immediately exported from the server system 1, e.g. to an external storage means or a read-only medium (e.g. a distinct database), ranging from a configurably selectable point in time in the past up to the current time (e.g. within the time interval of 1 h). The emergency logging may be activated by a user logged-in to the at least one client system 2. It is also possible to provide a client/server system as described above that is not used for steering the display at the clients, but exclusively for logging.

### Archiving of logging data / log entries

In order to further decrease the amount of log entries stored at the server system 1, the "server-internal" logging data may be exported into an external storage means and may be subsequently removed from the server system 1. Such archives may later be played back (reimported) into the server system 1.

### Visualisation of logging data / log entries

In order to visualise / analyse recorded log entries, the server system 1 may provide a search module 15 (cf. Fig. 3) for searching the log entries to be displayed and / or a replay module 17 for displaying the respective log entries.

The search module 15 may be adapted to allow a user to search for certain log entries based on any of the following search attributes:
- A time-span and / or parameters of a user session (ranging from the point in time of log-in to log-out): date, start time, end time and / or user(s)/role(s)
- A connected client: client identification, such as IP address, portname and / or hostname
- A logged-in user: user identifier and / or role identifier

The replay module 17 preferably allows a 1-to-1 replay of the log entries (preferably one after the other based on their respective time-stamps), which results in a 1-to-1 displaying of the screen (sequence) just as it was at the time the screen was originally displayed at the at least one client system 2. To this end, the replay module may provide a graphical user interface (GUI) that "mimics" the original screen displayed at the at least one client system 2. Preferably, the GUI is entirely based on the recorded log entries and / or the visual display information. In one aspect, the replay module may further provide functionality and corresponding user controls to allow steering the replay similar to a video, such as:
- Selecting a particular point in time (e.g. data, and / or time)
- Selecting the replay speed (original speed, decelerated speed (slow motion) and / or accelerated speed (fast motion))
- Starting the replay forwards, starting the replay backwards, stop, pause and / or resume

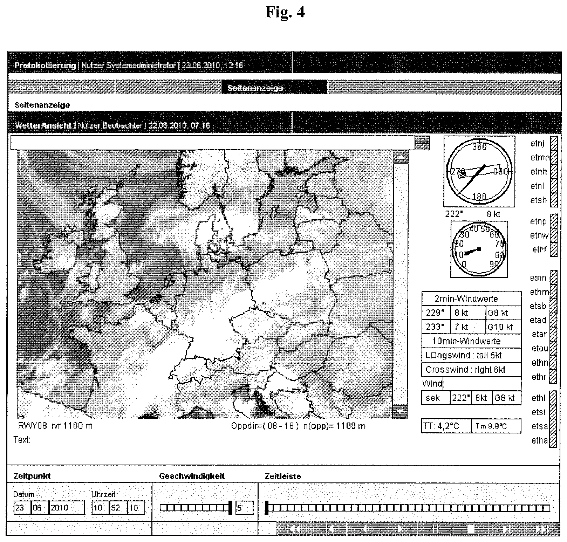

Accordingly, embodiments of the present invention allow for a graphical and / or animated inspection of the recorded log entries, as exemplarily shown in Fig. 4.

Additionally or alternatively, the log entries to be replayed may be transferred back to the at least one client system 2 and displayed there (instead of being displayed via the replay module's GUI).

### Steps performed by the client/server system

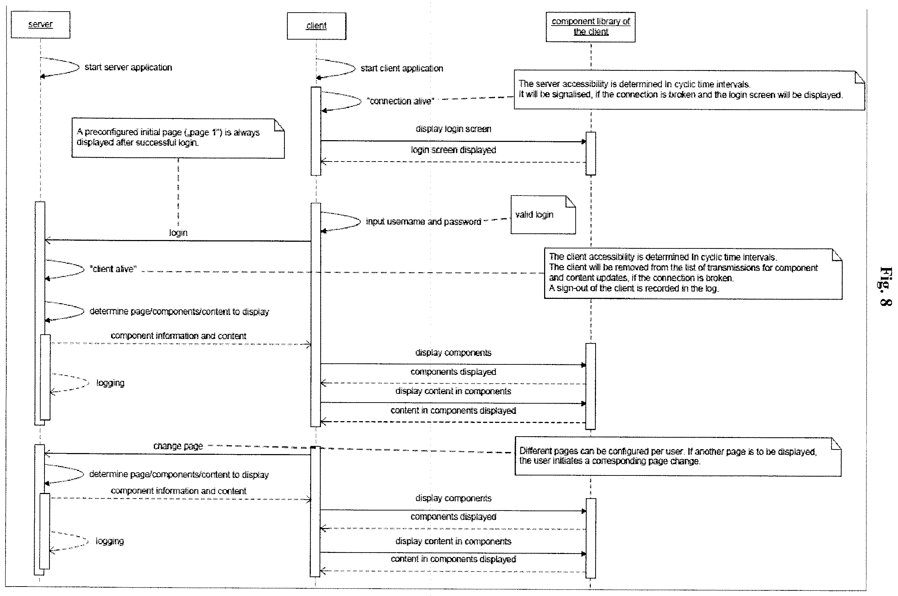

In the following, sequences of steps performed by a client/server system according to an embodiment of the invention are described in more detail with reference to the sequence diagrams shown in Figs. 8 to 12 (in the figures, "server" refers to the server system 1 and "client" refers to the client system 2).

Fig. 8 shows the steps performed during start-up/login of the system. As can be seen, after both the server system 1 and the client system 2 have been started, the client system 2 displays an initial login screen (preferably retrieved from a component library of the client system 2). After the user has entered his credentials (e.g. username and password) into the login screen, the information is sent to the server system 1 for validation.

Further, the client system 2 performs a "connection alive" function, preferably regularly in cyclic time intervals, in order to determine whether the server system 1 is accessible. If the client system 2 determines that the connection to the server system 1 is broken, the above-described login screen will be displayed. Similarly, the server system 1 performs a "client alive" function, preferably regularly in cyclic time intervals, in order to determine whether the client system 2 is available. If the server system 1 determines that the connection to the client system 2 is broken, the client system 2 will be removed from the list of transmissions for component and content updates and / or a sign-out of the client system 2 is recorded in the log.

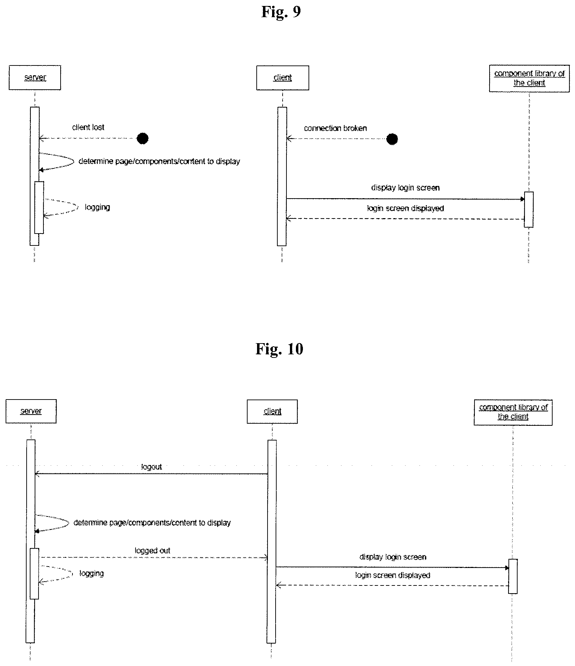

As can be seen in Figs. 9 and 10, the logging is preferably only performed by the server system 1 as long as the user is logged-in to the client system 2. In order for the server system 1 to correctly log the point in time when the client system 2 becomes unavailable, two events are provided: "connection broken" (cf. Fig. 9) and "logout" (cf. Fig. 10).

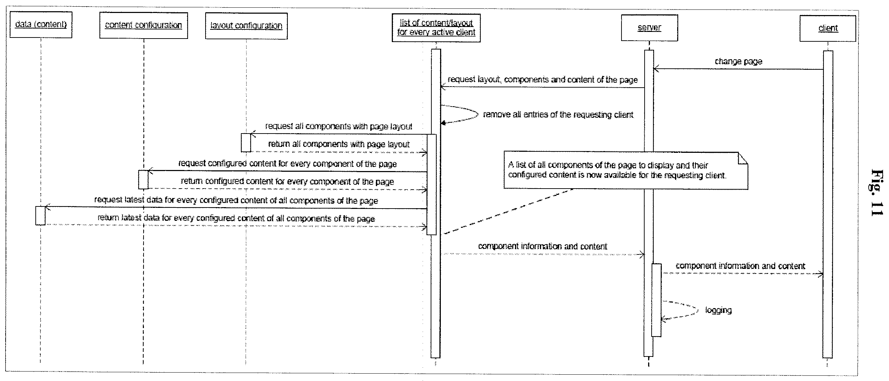

Fig. 11 shows a sequence of steps performed by the client/server system during logging. It should be noted that the sequence shown in Figs. 8 and 11 are similar, except for the fact that in Fig. 8 (initial login), a predetermined page is shown (the login page) and in Fig. 11, the respective subsequent page is shown. Fig. 11 shows how the server system 1 has knowledge of which client system 2 currently displays which data (i.e. components and layout) and how these data are delivered to the client system(s) 2 and when they are logged.

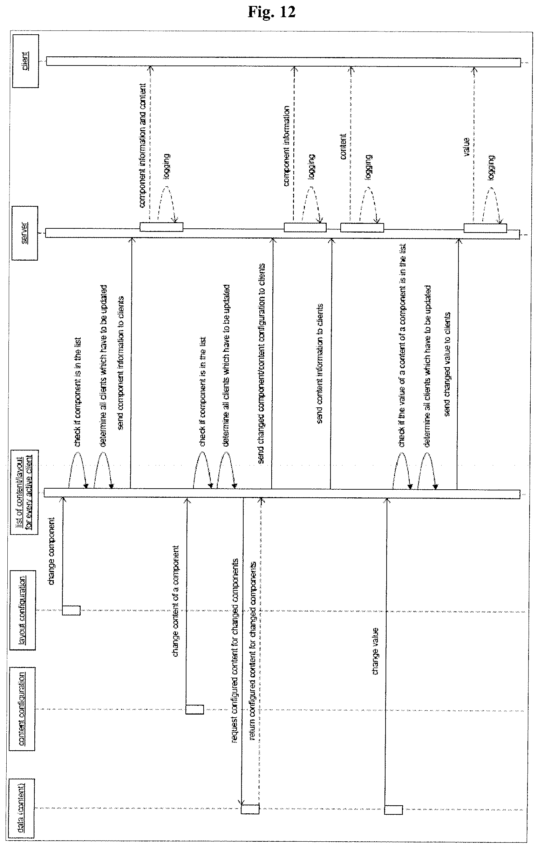

Fig. 12 shows three scenarios of updates and / or logging performed by the server system 1. As mentioned further above, the logging preferably encompasses layout and displayed data. The three possible scenarios are:
1) change of layout (e.g. changing the size and/or position of a display component on a particular screen mask, or the removal or replacement thereof; cf. "change component" in Fig. 12)
2) change of the data element(s) associated with the display component (cf. "change content of a component" in Fig. 12)
3) change of the data element's current value (e.g. current crosswind amount; cf. "change value" in Fig. 12)

## Claims

1. A method for logging real-time data to be displayed on at least one client system (2), wherein the method comprises the following steps performed by a server system (1):
a. sending first real-time data to the at least one client system (2), wherein the first real-time data comprises a first value of a data item and visual display information;
b. creating a first log entry (100) for the data item, wherein the first log entry (100) comprises the first value of the data item to be displayed on the at least one client system (2) and the visual display information;
c. sending second real-time data to the at least one client system (2), wherein the second real-time data comprises a second value of the data item, but no visual display information;
d. if the first and second values of the data item are different, creating a second log entry (101) for the data item, wherein the second log entry (101) comprises the second value of the data item to be displayed on the at least one client system (2);
e. wherein the real-time data to be displayed on the at least one client system (2) is always sent from the server system (1).

2. The method of claim 1, wherein the first log entry (100) comprises a unique identifier and a first time-stamp and wherein the second log entry (101) comprises the same unique identifier and a second time-stamp, wherein the first and second time-stamps indicate the creation time of the respective log entries (100, 101).

3. The method of claim 1 or 2, wherein the first (100) and second (101) log entries comprise at least one user identifier and / or role identifier of at least one user who is logged-in at the at least one client system (2).

4. The method of the preceding claim, wherein the first (100) and second (101) log entries comprise only a reference to the least one user identifier and / or role identifier, the least one user identifier and / or role identifier being stored in a user repository.

5. The method of any of the preceding claims, wherein the first (100) and second (101) log entries comprise information selected from the group comprising an IP address, port number and / or hostname of the at least one client system (2), a time-stamp of at least one user logging-in at the at least one client system (2) and / or a time-stamp of at least one user logging-out of the at least one client system (2).

6. The method of any of the preceding claims, wherein the visual display information indicates at least one screen mask to be displayed on the at least one client system (2), wherein the at least one screen mask comprises at least one visual element adapted for displaying the data item.

7. The method of any of the preceding claims, wherein the first (100) and / or second (101) log entry is created only if the at least one client system (2) has confirmed receipt of the first and / or second real-time data.

8. The method of any of the preceding claims, comprising the further steps of receiving an emergency event indication and immediately exporting all log entries (100,101) that have been created since a configurable elapsed point in time.

9. The method of any of the preceding claims, comprising the further steps of loading a sequence of created log entries (100, 101) and displaying each loaded log entry (100, 101) one after another, thereby replaying the sequence.

10. A computer program comprising instructions for implementing any of the above methods.

11. A server system (1) for logging real-time data to be displayed on at least one client system (2), wherein the server system comprises (1):
a. means for sending first real-time data to the at least one client system (2), wherein the first real-time data comprises a first value of a data item and visual display information;
b. a logging module (10), adapted for creating a first log entry (100) for the data item, wherein the first log entry (100) comprises the first value of the data item to be displayed on the at least one client system (2) and the visual display information;
c. means for sending second real-time data to the at least one client system (2), wherein the second real-time data comprises a second value of the data item, but no visual display information;
d. wherein if the first and second values of the data item are different, the logging module (10) is further adapted for creating a second log entry (101) for the data item, wherein the second log entry (101) comprises the second value of the data item to be displayed on the at least one client system (2);
e. wherein the real-time data to be displayed on the at least one client system (2) is always sent from the server system (1).

12. The server system (1) of the preceding claim, further comprising a search module (15), wherein the search module (15) is adapted for loading at least one created log entry (100, 101) based on search attributes selected from the group comprising a time span of a user session, a client system identification, a user identifier and / or role identifier, a screen mask identifier and / or a value of a data item.

13. The server system (1) of claim 11 or 12, further comprising a replay module (17), wherein the replay module (17) is adapted for receiving a sequence of created log entries (100, 101) and displaying each received log entry (100, 101) one after another, thereby replaying the sequence.

## Patentansprüche

1. Ein Verfahren zum Protokollieren von Echtzeitdaten, die auf mindestens einem Client-System (2) anzuzeigen sind, wobei das Verfahren die folgenden von einem Server-System (1) durchgeführten Schritte umfasst:
a. Senden von ersten Echtzeitdaten an das mindestens eine Client-System (2), wobei die ersten Echtzeitdaten einen ersten Wert eines Datenelements und visuelle Anzeigeinformationen umfassen;
b. Erzeugen eines ersten Protokolleintrags (100) für das Datenelement, wobei der erste Protokolleintrag (100) den ersten Wert des auf dem mindestens einen Client-System (2) anzuzeigenden Datenelements und die visuelle Anzeigeinformation umfasst;
c. Senden von zweiten Echtzeitdaten an das mindestens eine Client-System (2), wobei die zweiten Echtzeitdaten einen zweiten Wert des Datenelements, aber keine visuellen Anzeigeinformationen umfassen;
d. wenn der erste und der zweite Wert des Datenelements unterschiedlich sind, Erzeugen eines zweiten Protokolleintrags (101) für das Datenelement, wobei der zweite Protokolleintrag (101) den zweiten Wert des Datenelements umfasst, der auf dem mindestens einen Client-System (2) anzuzeigen ist;
e. wobei die Echtzeitdaten, die auf dem mindestens einen Client-System (2) anzuzeigen sind, immer von dem Server-System (1) gesendet werden.

2. Das Verfahren nach Anspruch 1, wobei der erste Protokolleintrag (100) einen eindeutigen Bezeichner und einen ersten Zeitstempel umfasst und wobei der zweite Protokolleintrag (101) denselben eindeutigen Bezeichner und einen zweiten Zeitstempel umfasst, wobei der erste und der zweite Zeitstempel die Erstellungszeit der jeweiligen Protokolleinträge (100, 101) angeben.

3. Das Verfahren nach Anspruch 1 oder 2, wobei der erste (100) und der zweite (101) Protokolleintrag mindestens eine Benutzerkennung und/oder eine Rollenkennung mindestens eines Benutzers umfassen, der in dem mindestens einen Client-System (2) eingeloggt ist.

4. Das Verfahren nach dem vorhergehenden Anspruch, wobei die ersten (100) und zweiten (101) Protokolleinträge nur einen Verweis auf der mindestens einen Benutzerkennung und / oder Rollenkennung umfassen, wobei die mindestens eine Benutzerkennung und / oder Rollenkennung in einem Benutzer-Repository gespeichert ist.

5. Das Verfahren nach einem der vorhergehenden Ansprüche, wobei die ersten (100) und zweiten (101) Protokolleinträge Informationen umfassen, die aus der Gruppe ausgewählt sind, die eine IP-Adresse, eine Port-Nummer und/oder einen Hostnamen des mindestens einen Client-Systems (2), einen Zeitstempel mindestens einer Benutzeranmeldung bei dem mindestens einen Client-System (2) und/oder einen Zeitstempel mindestens einer Benutzerabmeldung von dem mindestens einen Client-System (2) umfasst.

6. Das Verfahren nach einem der vorhergehenden Ansprüche, wobei die visuelle Anzeigeinformation mindestens eine Bildschirmmaske anzeigt, die auf dem mindestens einen Client-System (2) anzuzeigen ist, wobei die mindestens eine Bildschirmmaske mindestens ein visuelles Element umfasst, das zum Anzeigen des Datenelements konfiguriert ist.

7. Das Verfahren nach einem der vorhergehenden Ansprüche, wobei der erste (100) und/oder zweite (101) Protokolleintrag nur erzeugt wird, wenn das mindestens eine Client-System (2) Empfang der ersten und/oder zweiten Echtzeitdaten bestätigt hat.

8. Das Verfahren nach einem der vorhergehenden Ansprüche, umfassend die weiteren Schritte von Empfangen einer Notfallereignisanzeige und sofortiges Exportieren aller Protokolleinträge (100, 101), die seit einem konfigurierbaren verstrichenen Zeitpunkt erstellt wurden.

9. Das Verfahren nach einem der vorhergehenden Ansprüche, umfassend die weiteren Schritte von Laden einer Sequenz von erzeugten Protokolleinträgen (100, 101) und Anzeigen jedes geladenen Protokolleintrags (100, 101) einen nach dem anderen, wodurch die Sequenz wiedergegeben wird.

10. Ein Computerprogramm, umfassend Anweisungen zum Implementieren eines beliebigen der obigen Verfahren.

11. Ein Server-System (1) zum Protokollieren von Echtzeitdaten, die auf mindestens einem Client-System (2) anzuzeigen sind, wobei das Server-System (1) umfasst:
a. Mittel zum Senden von ersten Echtzeitdaten an das mindestens eine Client-System (2), wobei die ersten Echtzeitdaten einen ersten Wert eines Datenelements und visuelle Anzeigeinformationen umfassen;
b. ein Protokollierungsmodul (10), das konfiguriert ist, um einen ersten Protokolleintrag (100) für das Datenelement zu erzeugen, wobei der erste Protokolleintrag (100) den ersten Wert des Datenelements, der auf dem mindestens einen Client-System (2) anzuzeigen ist, und die visuelle Anzeigeinformation umfasst;
c. Mittel zum Senden von zweiten Echtzeitdaten an das mindestens eine Client-System (2), wobei die zweiten Echtzeitdaten einen zweiten Wert des Datenelements, aber keine visuellen Anzeigeinformationen umfassen;
d. wobei, wenn der erste und der zweite Wert des Datenelements unterschiedlich sind, das Protokollierungsmodul (10) ferner konfiguriert ist, um einen zweiten Protokolleintrag (101) für das Datenelement zu erzeugen, wobei der zweite Protokolleintrag (101) den zweiten Wert des Datenelements umfasst, der auf dem mindestens einen Client-System (2) anzuzeigen ist;
e. wobei die Echtzeitdaten, die auf dem mindestens einen Client-System (2) anzuzeigen sind, immer von dem Server-System (1) gesendet werden.

12. Das Serversystem (1) nach dem vorhergehenden Anspruch, ferner umfassend ein Suchmodul (15), wobei das Suchmodul (15) konfiguriert ist, um mindestens einen erzeugten Protokolleintrag (100, 101) zu laden, der auf Suchattributen basiert, die aus der Gruppe ausgewählt sind, die eine Zeitspanne einer Benutzersitzung, eine Client-System-Identifikation, eine Benutzerkennung und / oder eine Rollenkennung, eine Bildschirmmaskenkennung und / oder einen Wert eines Datenelements umfasst.

13. Das Serversystem (1) nach Anspruch 11 oder 12, ferner umfassend ein Wiedergabemodul (17), wobei das Wiedergabemodul (17) konfiguriert ist, um eine Sequenz von erstellten Protokolleinträgen (100, 101) zu empfangen und jeden empfangenen Protokolleintrag (100, 101) einen nach dem anderen anzuzeigen, wodurch die Sequenz wiedergegeben wird.

## Revendications

1. Un procédé de journalisation de données en temps réel à afficher sur au moins un système client (2), dans lequel le procédé comprend les étapes suivantes exécutées par un système serveur (1) :
a. l'envoi de premières données en temps réel à l'au moins un système client (2), les première données en temps réel comprenant une première valeur d'un élément de donnée et des informations d'affichage visuel ;
b. la création d'une première rubrique de journal (100) pour l'élément de donnée, la première rubrique de journal (100) comprenant la première valeur de l'élément de donnée à afficher sur l'au moins un système client (2) et les informations d'affichage visuel ;
c. l'envoi de secondes données en temps réel à l'au moins un système client (2), les secondes données en temps réel comprenant une seconde valeur de l'élément de donnée, mais pas d'information d'affichage visuel ;
d. si la première et la seconde valeur de l'élément de donnée sont différentes, la création d'une seconde rubrique de journal (101) pour l'élément de donnée, la seconde rubrique de journal (101) comprenant la seconde valeur de l'élément de donnée à afficher sur l'au moins un système client (2) ;
e. dans lequel les données en temps réel à afficher sur l'au moins un système client (2) sont toujours envoyées depuis le système serveur (1).

2. Le procédé de la revendication 1, dans lequel la première rubrique de journal (100) comprend un identifiant unique et un premier horodatage et dans lequel la seconde rubrique de journal (101) comprend le même identifiant unique et un second horodatage, le premier et le second horodatage indiquant l'instant de création des rubriques de journal respectives (100, 101).

3. Le procédé de la revendication 1 ou 2, dans lequel la première (100) et la seconde (101) rubrique de journal comprennent au moins un identifiant d'utilisateur et/ou un identifiant de rôle d'au moins un utilisateur qui s'est connecté à l'au moins un système client (2).

4. Le procédé de la revendication précédente, dans lequel la première (100) et la seconde (101) rubrique de journal ne comprennent qu'une référence à l'au moins un identifiant d'utilisateur et/ou identifiant de rôle, l'au moins un identifiant d'utilisateur et/ou identifiant de rôle étant stocké dans un référentiel d'utilisateurs.

5. Le procédé de l'une des revendications précédentes, dans lequel la première (100) et la seconde (101) rubrique de journal comprennent des informations choisies dans le groupe formé par une adresse IP, un numéro de port et/ou un nom d'hôte de l'au moins un système client (2), un horodatage d'au moins un utilisateur qui s'identifie sur l'au moins un système client (2) et/ou un horodatage d'au moins un utilisateur qui se déconnecte de l'au moins un système client (2).

6. Le procédé de l'une des revendications précédentes, dans lequel les informations d'affichage virtuel indiquent au moins un masque d'écran à afficher sur l'au moins un système client (2), l'au moins un masque d'écran comprenant au moins un élément visuel apte à afficher l'élément de donnée.

7. Le procédé de l'une des revendications précédentes, dans lequel la première (100) et/ou la seconde (101) rubrique de journal ne sont créées que si l'au moins un système client (2) a confirmé la réception des premières et/ou secondes données en temps réel.

8. Le procédé de l'une des revendications précédentes, comprenant les étapes ultérieures de réception d'une indication d'événement d'urgence et l'export immédiat de toutes les rubriques de journal (100, 101) qui ont été créées depuis un instant écoulé configurable.

9. Le procédé de l'une des revendications précédentes, comprenant les étapes ultérieures de chargement d'une séquence de rubrique de journal créée (100, 101) et l'affichage les unes après les autres de chacune des rubriques de journal chargées (100, 101), de manière à réitérer ainsi la séquence.

10. Un programme informatique comprenant des instructions pour la mise en œuvre de l'un des procédés ci-dessus.

11. Un système serveur (1) pour la journalisation de données en temps réel à afficher sur au moins un système client (2), dans lequel le système serveur (1) comprend :
a. un moyen d'envoi de premières données en temps réel à l'au moins un système client (2), les première données en temps réel comprenant une première valeur d'un élément de donnée et des informations d'affichage visuel ;
b. un module de journalisation (10), apte à créer une première rubrique de journal (100) pour l'élément de donnée, la première rubrique de journal (100) comprenant la première valeur de l'élément de donnée à afficher sur l'au moins un système client (2) et les informations d'affichage visuel ;
c. un moyen d'envoi de secondes données en temps réel à l'au moins un système client (2), les secondes données en temps réel comprenant une seconde valeur de l'élément de donnée, mais pas d'information d'affichage visuel ;
d. dans lequel, si la première et la seconde valeur de l'élément de donnée sont différentes, le module de journalisation (10) est en outre apte à créer une seconde rubrique de journal (101) pour l'élément de donnée, la seconde rubrique de journal (101) comprenant la seconde valeur de l'élément de donnée à afficher sur l'au moins un système client (2) ;
e. dans lequel les données en temps réel à afficher sur l'au moins un système client (2) sont toujours envoyées depuis le système serveur (1).

12. Le système serveur (1) de la revendication précédente, comprenant en outre un module de recherche (15), le module de recherche (15) étant apte à charger au moins une rubrique de journal créée (100, 101) en fonction d'attributs de recherche choisis dans le groupe formé par une étendue temporelle d'une session utilisateur, une identification du client par le système, un identifiant d'utilisateur et/ou un identifiant de rôle, un identifiant de masque d'écran et/ou une valeur d'un élément de donnée.

13. Le système serveur (1) de la revendication 11 ou 12, comprenant en outre un module de réitération (17), le module de réitération (17) étant apte à recevoir une séquence de rubriques de journal créées (100, 101) et à afficher les unes après les autres chacune des rubriques de journal reçues (100, 101), de manière à réitérer ainsi la séquence.
